Europäisches Patentamt

European Patent Office

Office européen des brevets

(11) Veröffentlichungsnummer: **0 481 273 A2**

# EUROPÄISCHE PATENTANMELDUNG

(21) Anmeldenummer: **91116649.4**

(22) Anmeldetag: **30.09.91**

(51) Int. Cl.5: **C08J 5/18**, G02B 1/04,
//C08L29:04

(30) Priorität: **13.10.90 DE 4032596**
**01.05.91 DE 4114229**

(43) Veröffentlichungstag der Anmeldung:
**22.04.92 Patentblatt 92/17**

(84) Benannte Vertragsstaaten:
**CH DE FR GB IT LI NL**

(71) Anmelder: **BAYER AG**

**W-5090 Leverkusen 1 Bayerwerk(DE)**

(72) Erfinder: **Ostoja-Starzewski, Karl-Heinz
Aleksander, Dr.
Jeschkenweg 10
W-6368 Bad Vilbel(DE)**
Erfinder: **Roche, Edouard, Dr.
Im Zinkenpütz 12
W-5204 Lohmar 1(DE)**

(54) **Verfahren zur Herstellung von Polarisationsfolien.**

(57) Ein Verfahren zur Herstellung von Polarisationsfolien auf der Basis eines Polyvinylalkohol-Polyacetylenpfropfcopolymerisates mit einem Acetylenanteil von 0:01 bis 15 Gew.-% durch Auftragen einer Lösung des Pfropfcopolymerisates, mittels eines dosierenden Gießers, auf eine an der Auftragstelle vorbeigeführte Trägerfolie, Entfernen des Lösungsmittels, Abziehen der Pfropfcopolymerisatfolie von der Trägerfolie und Recken der Pfropfcopolymerisatfolie führt bei hohen Produktionsgeschwindigkeiten zu gleichmäßigen Produkten.

EP 0 481 273 A2

EP 0 481 273 A2

Die Erfindung betrifft ein Verfahren zur Herstellung von Polarisationsfolien auf der Basis von in einer Polymermatrix hergestelltem Polyacetylen.

Es ist aus EP-B-249 019 bekannt, Acetylen in einer Polyvinylalkoholmatrix zu polymerisieren und das resultierende Produkt zu einer lichtpolarisierenden Folie durch Auftragen einer Lösung der Polyacetylenpolymermatrix auf einen Träger, Abziehen der Polymerfolie vom Träger und Recken der Folie herzustellen. Der Auftrag der Polymerlösung geschieht mit einem Rakel.

Um mit dieser Verfahrensweise zu einem gleichmäßigen Produkt ausreichender Qualität zu kommen, sind nur geringe Produktionsgeschwindigkeiten möglich. Ein weiterer Nachteil ist die Verwendung von Dimethylformamid als Lösungsmittel für das Pfropfcopolymerisat aus Polyvinylalkohol und Polyacetylen.

Aufgabe der Erfindung war daher, ein Verfahren bereitzustellen, das es gestattet, gleichmäßige Polarisationsfolien guter Qualität mit größerer Geschwindigkeit herzustellen.

Diese Aufgabe wird dadurch gelöst, daß man die Lösung des Pfropfcopolymer aus Polyvinylalkohol und Polyacetylen mittels eines dosierenden Gießers auf einen an der Gießstelle vorbeigeführten Träger gießt, trocknet, vom Träger abzieht und reckt.

Gegenstand der Erfindung ist daher ein Verfahren zur Herstellung von Polarisationsfolien auf der Basis eines Polyvinylalkohol-Polyacetylenpfropfcopolymerisates (PVAL-PAC) mit einem Acetylenanteil von 0:01 bis 15 Gew.-% durch Auftragen einer Lösung des Pfropfcopolymerisates mittels eines dosierenden Gießers auf eine an der Auftragstelle vorbeigeführte Trägerfolie, Entfernen des Lösungsmittels, Abziehen der Pfropfcopolymerisatfolie von der Trägerfolie und Recken der Pfropfcopolymerisatfolie.

Das Recken erfolgt vorzugsweise im Verhältnis 1:1,5 bis 1:13, insbesondere im Verhältnis 1:3 bis 1:8. Beim Gießen verfährt man insbesondere so, daß man mindestens eine Schicht einer wäßrigen Lösung des Polyvinylalkohol-Polyacetylenpfropfcopolymerisates mit einer Viskosität von 15 bis 1000 mPas und einer Oberflächenspannung von 15 bis 60 mN/m oder gegebenenfalls ein Paket enthaltend eine Schicht einer verdünnten wäßrigen Lösung des Polyvinylalkohol-Polyacetylenpfropfcopolymerisates oder einer wäßrigen Polyvinylalkohollösung mit einer Viskosität von 10 bis 150 mPas und einer Oberflächenspannung von 16 bis 34 mN/m und mindestens eine Schicht einer wäßrigen Lösung des Polyvinylalkohol-Polyacetylenpropfcopolymerisates mit einer Viskosität von 100 bis 1000 mPas und einer Oberflächenspannung von 28 bis 52 mN/m, wobei die Polyvinylalkohollösung bzw. die verdünnte Polyvinylalkohol-Polyacetylenpfropfcopolymerisat-Lösung die untere Schicht (Beschleunigungs-Schicht) des Paketes darstellt, auf die an der Gießstelle vorbeigeführte Trägerfolie gießt.

Die Entfernung des Lösungsmittels, hier Wasser, geschieht vorzugsweise durch Trocknung mit Luft, wobei die Luft eine Temperatur bis 40°C aufweist.

Die Gesamtnaßschichtdicke beträgt insbesondere 100 bis 600 $\mu$m.

Die Naßschichtdicke der Polyvinylalkoholschicht bzw. der verdünnten PVAL-PAC-Schicht (Beschleunigungs-Schicht) beträgt vorzugsweise von 10 bis 60 $\mu$m, die Naßschichtdicke der Pfropfcopolymerisatschicht (Zwischenschicht) beträgt vorzugsweise von 100 bis 300 $\mu$m.

Die genannten Viskositäten entsprechen bei der Pfropfcopolymerisatlösung etwa einer Konzentration an Polyvinylalkohol-Polyacetylen-Pfropfcopolymerisat von 4 bis 12 Gew.-% und bei der Polyvinylalkohollösung bzw. verdünnten PVAL-PAC-Lösung etwa einer Konzentration an Polymer von 2 bis 8 Gew.-%.

Eine Verfahrensvariante für die Herstellung der Folie besteht darin, das Einschichtgießverfahren mit dem Polyvinylalkohol-Polyacetylen-Pfropfcopolymerisat mehrfach hintereinander zu wiederholen. Es wird z.B. eine 5 gew.-%ige PVAL-PAC-Lösung mit 120 $\mu$m gegossen und getrocknet. Danach wird die gleiche Lösung nochmal gegossen. Dieses Gießverfahren wird so oft wiederholt, bis die gewünschte Trockenschichtdicke erreicht ist.

Mit dem erfindungsgemäßen Verfahren ist es möglich, Folien ausreichender Dicke (etwa 5 bis 45 $\mu$m) und ausreichendem Polyacetylengehalt zu gießen, um nach dem Recken Folien mit sehr guten Polarisationseigenschaften zu erhalten.

In einer bevorzugten Ausführungsform wird das Gießpaket um eine weitere Schicht (Spreitungsschicht) einer wäßrigen Polyvinylalkohollösung bzw. einer verdünnten PVAL-PAC-Pfropfcopolymersatlösung mit einer Viskosität von 10 bis 150 mPas und einer Oberflächenspannung von 16 bis 34 mN/m ergänzt, die als oberste Schicht angetragen wird, so daß die Lösung des Pfropfcopolymerisates zwischen die Schichten des Polyvinylalkohols bzw. die Schichten der verdünnten PVAL-PAC-Pfropfcopolymerisatlösung eingebettet ist. Die Naßschichtdicke der weiteren Schicht beträgt vorzugsweise von 10 bis 60 $\mu$m.

Als Polyvinylalkohol kommt jeder Polyvinylalkohol in Frage, der z.B. durch vollständige oder teilweise Verseifung von Polyvinylacetat hergestellt worden ist, insbesondere ein Polyvinylalkohol (PVAL), bei dem mehr als 90 bis 100 %, bevorzugt 95 - 100 % aller (Co)Monomeren des Polymer Vinylalkoholeinheiten sind. Der Rest zu 100 % aller Monomereinheiten besteht aus Monomereinheiten, wie Ethylen, Vinylacetat, Vinyltrifluoracetat und anderen für solche Copolymere bekannten Comonomereinheiten.

2

Diese Copolymere können als vorwiegend taktische oder ataktische Polymere vorliegen. Der erfindungsgemäß einzusetzende PVAL kann beispielsweise durch Copolymerisation von mehr als 90 bis 100 % Vinylacetateinheiten mit weniger als 10 bis 0 Ethyleneinheiten und vollständige Verseifung aller Vinylacetateinheiten hergestellt werden. Er kann aber auch durch Polymerisation von Vinylacetat oder Vinyltrifluoracetat und Verseifung von mehr als 90 bis 100 % aller Estergruppen hergestellt werden. In der industriellen Praxis wird PVAL durch Verseifung von Polyvinylacetat zum gewünschten Grad hergestellt.

Polyvinylalkohol-Polyacetylenpfropfcopolymerisate (PVAL-PAC) im Sinne der Erfindung sind vorzugsweise solche Pfropfpolymerisate, wie sie in den Offenlegungsschriften EP-A-374 627 oder EP-A-384 248 jeweils in Anspruch 1 beschrieben sind.

Als Trägerfolien, von denen die erfindungsgemäß hergestellte Folie leicht abzuziehen ist, eignen sich z.B. Polyethylenterephthalat- oder Cellulosetriacetat-Folien.

Nach dem erfindungsgemäßen Verfahren sind Gießgeschwindigkeiten von 40 m/min und mehr möglich.

Falls die Endtrockendicke in einem Guß erreicht werden soll, werden die Konzentration an PVAL-PAC-Pfropfcopolymerisat und der Naßauftrag erhöht, z.B. 9 Gew.-% und 350 $\mu$m. In dem Fall steigt die Viskosität bis auf 400 mPa.s und mehr an, so daß mit geringeren Geschwindigkeiten gegossen wird.

Die Endtrocknungstemperatur kann je nach dem gewünschten Restfeuchtegehalt der Folie größer oder gleich der Vortrocknungstemperatur eingestellt werden.

Ein dosierender Gießer ist ein Gießer, bei dem von einer einmal aufgetragenen Menge an Gießflüssigkeit auf den Träger kein Feststoff mehr entfernt wird. Die Schichtdicke des Gießauftrags wird durch die Auftragsgeschwindigkeit der Gießflüssigkeit und die Geschwindigkeit des Trägers, die üblicherweise wesentlich größer ist als die Auftragsgeschwindigkeit der Gießflüssigkeit, festgelegt. Geeignete dosierende Gießer sind z.B. Extrusionsgießer und insbesondere Gleitflächengießer.

Extrusionsgießer bringen die Beschichtungsflüssigkeit durch einen auf die Breite des Materials abgestimmten Schlitz direkt auf den Träger und sind insbesondere dann geeignet, wenn eine einzige Beschichtungsflüssigkeit aufgebracht werden soll.

Unter einem Gleitflächengießer wird ein Gießer verstanden, der eine geneigte Gießfläche aufweist, in der quer zur Neigung ein oder mehrere Austrittsschlitze vorgesehen sind, aus denen die Beschichtungsflüssigkeiten austreten, um über die geneigte Fläche (Gleitfläche) hinabzufließen.

Der Gleitflächengießer bietet die Möglichkeit, mehrere Beschichtungsflüssigkeiten gleichzeitig auf einen Träger aufzubringen, ohne daß sich zwischen den einzelnen Gießschichten Vermischung einstellt.

Am Ende der Gleitfläche kann die Beschichtungsflüssigkeit entweder als frei fallenden Vorhang auf den zu beschichtenden Träger auftreffen (Vorhanggießer) oder in einem Meniskus nach oben umgelenkt und von dem vorbeigeführten Träger mitgenommen werden (Meniskusgießer).

Unter dem Meniskus wird üblicherweise zur Verbesserung der Gießqualität ein Vakuum angelegt, beispielsweise zwischen 6 und 40 mbar.

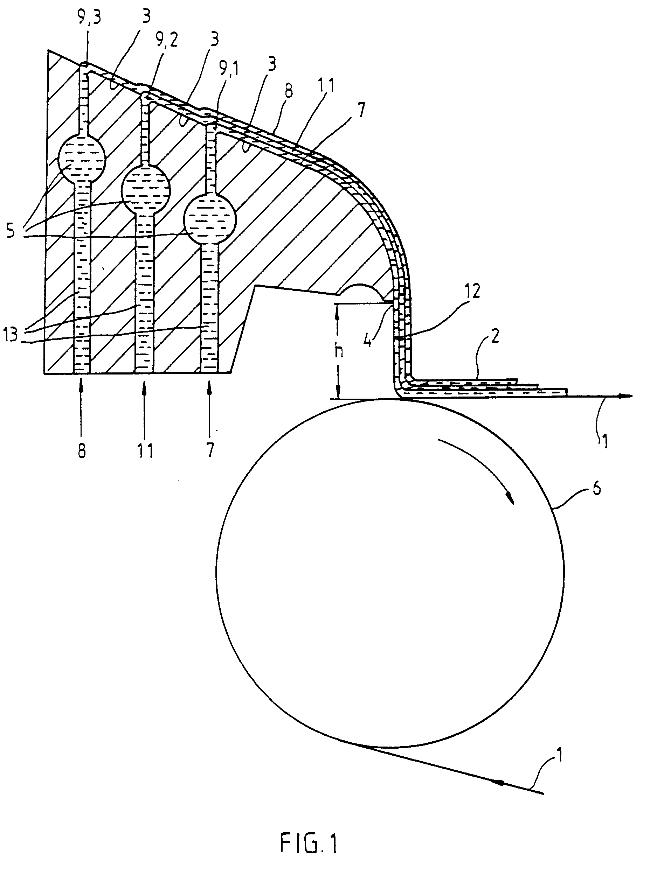

Ein geeigneter Vorhanggießer ist in Fig. 1 dargestellt.

Fig. 1 zeigt einen Schnitt durch einen Vorhanggießer zur Durchführung des erfindungsgemäßen Verfahrens in vereinfachter schematischer Darstellung für eine hochviskose Schicht 11, die zwischen niederviskosen Schichten 7 und 8 eingebettet ist. Die Beschichtungsflüssigkeiten 7, 11 und 8 werden den Verteilerkammern 5 von außen über aufsteigende Kanäle 13 zugeführt (Pfeile), treten aus den Austrittsschlitzen 9.1 und 9.2 und 9.3 auf die geneigten Flächen 3 aus, fließen infolge der Schwerkraft und der durch Zugabe geeigneter Tenside entsprechend eingestellten Oberflächenspannung der Lösungen übereinander zu der schnabelförmigen Gießerkante 4 herab. An der Gießerkante 4 bildet sich ein über eine Höhe h frei fallender Vorhang 12, der sich auf eine über eine Gießwalze 6 herangeführte Bahn 1 legt. Die Schicht 7 erleichtert hierbei in erheblichem Maße das Trennen des Schichtpaketes 2 von der Gießerkante 4 und bewirkt ein gutes Benetzen der Bahn 1, so daß mit höheren Geschwindigkeiten beschichtet werden kann und die Qualität der Beschichtung verbessert wird. Die Schicht 8 schirmt die hochviskose Schicht 11 gegen die Außeneinflüsse ab und stabilisiert und glättet in erheblichem Maße den frei fallenden Flüssigkeitsvorhang 12.

Der Vorhang 12 beschichtet die Bahn 1 über ihre gesamte Breite, wobei der Überschuß an Begußmaterial an den Rändern durch Auffangwannen aufgefangen und abgeleitet werden kann. Es entstehen so Bahnen ohne Randabschnitt, die über die gesamte Breite mit den Beschichtungslösungen beschichtet sind und keinen Randwulst aufweisen.

Vorteilhafterweise wird die Bahn 1 aber nur bis fast an die Bahnränder beschichtet, wobei der Vorhang 12, wie bekannt, durch fast an die bewegte Bahn heranreichende Vorhangführungselemente geführt und somit an einer Zusammenziehung durch die Oberflächenspannung gehindert wird. Auf diese Weise geht weniger wertvolles Beschichtungsmaterial verloren. Die Bahn 1 mit dem Gießpaket 2 ist dann nicht über die volle Breite begossen.

Der erhebliche und überraschende Vorteil des Verfahrens nach der Erfindung liegt für den Vorhangbeguß in der unerwarteten Steigerung der Begießgeschwindigkeiten für hochviskose Gießlösungen 11. Für den Vorhanggießer ist besonders bemerkenswert, daß bereits eine Vorhanghöhe von z.B. h = 15 mm für eine hochwertige Beschichtung ausreichend ist. Bei der geringen Vorhanghöhe h ist eine besondere Abschirmung des Vorhangs gegen Flattern durch Luftbewegung häufig nicht mehr erforderlich, wodurch Kosten gespart werden und die Zugänglichkeit zum Vorhang verbessert wird. Außerdem wird durch das erfindungsgemäße Verfahren die Stabilität des Vorhangs erhöht, indem durch den Einsatz der Schicht 8 an der Ablaufkante 4 des Vorhanggießers keine Instabilitäten auftreten und die Schicht 11 des Vorhanges aus hochviskosen Lösungen aufgebaut werden kann. Durch die geringe Fallhöhe sind die Einschnürungen des Vorhangs durch die üblicherweise schräg nach innen geneigten Vorhanghalter sowie die Randverdickungen des Vorhanges 12 geringer, wodurch die Verluste im Randbereich der Bahn 1 beim Beschichten erheblich reduziert werden.

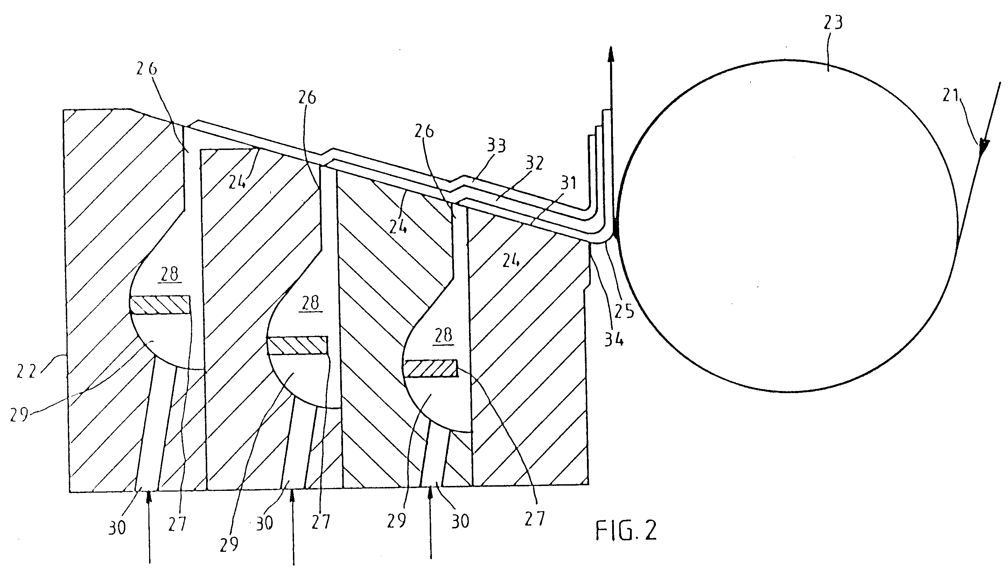

Ein geeigneter Meniskusgießer ist in Fig. 2 dargestellt.

Fig. 2 zeigt einen Schnitt durch einen Meniskusgießer zur Durchführung des erfindungsgemäßen Verfahrens in vereinfachter schematischer Darstellung für eine hochviskose Schicht 32, die zwischen niederviskosen Schichten 31 und 33 eingebettet ist. Gemäß Fig. 2 wird die zu beschichtende Bahn 21 über die Gießwalze 23 geführt. Die Beschichtung erfolgt am unteren Ende der Fließebene 24, wo sich der Beschichtungsmeniskus 25 ausbildet. Die Beschichtungsflüssigkeiten 31, 32 und 33 gelangen über die Zuführungsspalte (Austrittsschlitze) 26 auf die Fließebene 24. Im Inneren des Gießerblocks befinden sich die durch einen engen Verbindungsspalt 27 voneinander getrennten Druckverteilungskammern 28 und 29. Die Druckverteilungskammern 28 und 29 sowie die Spalte 26 und 27 erstrecken sich über die gesamte Bahnbreite. An die Druckverteilungskammer 29 sind die Zuleitungsrohre 30 für die Beschichtungsflüssigkeiten (Gießlösungen) angeschlossen. Die Druckverteilungskammer 29 wird daher definitionsgemäß als erste Druckverteilungskammer bezeichnet.

Die Gießlösungen werden in zeitlich dosierter Menge von Außen zugeführt (Pfeile), treten aus den Austrittsschlitzen 26 auf die geneigten Fließebenen 24 aus, fließen infolge der Schwerkraft und der durch Zugabe geeigneter Tenside entsprechend eingestellten Oberflächenspannungen der Lösungen übereinander zu der Gießerkante 34 herab. Zwischen Gießerkante 34 und Gießwalze 23 bildet sich ein Beschichtungsmeniskus, der durch das Anlegen eines bestimmten Sperrvakuums so tief einzieht, daß ein optimaler Beguß über die gesamte Bahnbreite gewährleistet ist. Die Schicht 31 erleichtert hierbei in erheblichem Maße das Trennen des Schichtpakets 31, 32, 33 von der Gießerkante 34 und bewirkt ein gutes Benetzen der Bahn 21, so daß mit höheren Geschwindigkeiten gegossen werden kann und die Gießqualität verbessert wird. Die Schicht 33 schirmt die hochviskose Schicht 32 gegen die Außeneinflüsse ab und stabilisiert und glättet in erheblichem Maße das gesamte Flüssigkeitspaket.

Anstelle der genannten Gießvorrichtungen lassen sich auch andere geeignete Gießvorrichtungen einsetzen, die beispielsweise eine höhere Zahl von Gießschlitzen (fünf oder sieben) aufweisen. Auf diesem Weg ist ein Mehrschichtguß, z.B. mit verschiedenfarbigen Lösungen möglich.

Die erfindungsgemäß hergestellten polarisierenden Filme werden zur Herstellung von Polarisationsfolien verwendet. Diese finden als Polarisationsfilter und optische Anzeigen Verwendung.

Die in dem nachfolgenden Beispiel verwendeten Symbole haben folgende Bedeutung:

$\eta$ = Viskosität (mPa.s)

$\sigma$ = Oberflächenspannung (mN/m)

$\delta$ = Naßauftrag auf der Bahn ($\mu$m)

$\nu$ = Bahngeschwindigkeit (m/min)

h = Vorhanghöhe (mm)

Beispiele

Beispiel 1

Herstellung des Polyvinylalkohol-Polyacetylencopolymerisates

Unter Luftausschluß wurde bei 40°C in eine 6 gew.-%ige Lösung von hochverseiftem Polyvinylalkohol (Restacetat-Gehalt ca. 1 %) in trockenem N-Methylpyrrolidon pro 100 g Polyvinylalkohol 1 mmol [NiPh-(Ph$_2$PCHCPhO)-(i-Pr$_3$PCHPh)] eingerührt und während 5 Minuten Acetylen polymerisiert. Das schwarzblaue Polymerisat wurde in Aceton gefällt, mit Aceton gründlich gewaschen und 11,5 gew.-%ig in Wasser gelöst. Die Viskosität der Lösung betrug bei 60°C ca. 500 mPas.

"Ph" steht in der Formel für Phenyl; "i-Pr" steht für Isopropyl.

Beispiel 2

Vorhangguß

Es wurden ca. 14 Gew.-% Glyzerin bezogen auf das Polymer zur fertigen Lösung aus Beispiel 1 zugesetzt und die fertige Gießlösung filtriert, entgast und anschließend auf eine Cellulosetriacetat-Trägerfolie eine 3-Schichtfolie nach dem vorstehend beschriebenen Vorhanggieß-Verfahren bei 60°C gegossen mit den in der Tabelle aufgeführten Kennwerten. Für die beiden Außenschichten wurden verdünnte wäßrige Polyvinylalkohol-Polyacetylen-Pfropfcopolymerisat-Lösungen verwendet.

| Schicht | Viskosität $\eta$ (mPas) | Oberflächenspannung $\sigma$ (mN/m) | Naßschichtdicke $\delta$ ($\mu$m) |
|---|---|---|---|
| 1 | 35 | 24.2 | 30 |
| 2 | 500 | 52 | 200 |
| 3 | 30 | 18.4 | 30 |

Gießgeschwindigkeit        V = 40 m/min
Vorhanghöhe        h = 60 mm
Die getrocknete Folie wurde von der Trägerfolie abgezogen und bei ca. 140°C gereckt. Der Reckgrad betrug 600 %. Die 8,4 $\mu$m dicke Polarisationsfolie (Dickenänderung - 60 %; Breitenänderung - 68 %) besaß im gesamten sichtbaren Wellenlängenbereich Transmissionswerte über 42 %, wobei die Polarisationsgrade im Bereich zwischen 540 und 710 nm über 95 % lagen.

Beispiel 3

Meniskusguß

Es wurden ca. 14 Gew.-% Glyzerin, bezogen auf das Polymer zur fertigen Lösung aus Beispiel 1 zugesetzt und die Gießlösung durch Verdünnen mit Wasser auf die unten genannten Viskositäten eingestellt, filtriert, entgast und anschließend auf eine Cellulosetriacetat-Trägerfolie eine 3-Schichtfolie nach dem vorstehend beschriebenen Meniskusverfahren bei ca. 40°C gegossen mit den in der Tabelle aufgeführten Kennwerten. Für die beiden Außenschichten wurden verdünnte wässrige Polyvinylalkohol-Polyacetylen- Pfropfcopolymerisat-Lösungen verwendet.

| Schicht | Viskosität $\eta$ (mPas) | Oberflächenspannung $\sigma$ (mN/m) | Naßschichtdicke $\delta$ ($\mu$m) |
|---|---|---|---|
| 1 | 40 | 24.2 | 30 |
| 2 | 350 | 52 | 200 |
| 3 | 40 | 20.6 | 30 |

Gießgeschwindigkeit        V = 40 m/min, Vakuum an Meniskus = 20 mbar.
Weitere Beispiele für andere Beschichtungsmöglichkeiten nach dem Meniskusguß sind in den Tabellen 2 und 3 aufgeführt.

Tabelle 2

| Schicht | $\eta$(mPa.s) | $\sigma$(mN/m) | $\delta$($\mu$m) |
|---|---|---|---|
| 1 | 20 (40°C) | 23 | 150 |

Diese Schicht wurd 8 mal hintereinander mit einer Gießgeschwindigkeit von 60 m/min gegossen. Die Trockenschichtdicke war 49 $\mu$m. Die getrocknete Folie wurde von der Trägerfolie abgezogen und bei ca. 145°C gereckt. Der Reckgrad betrug 632 %, die Breitenänderung beträgt - 70 %. Die 19,5 $\mu$m dicke Polarisationsfolie besaß im gesamten sichtbaren Wellenlängenbereich Transmissionswerte von ≧ 39 %, wobei die Polarisationsgrade im Bereich zwischen 450 und 730 nm über 95 % lagen.

Tabelle 3

| Schicht | $\eta$(mPa.s) | $\sigma$(mN/m) | $\delta$($\mu$m) |
|---------|---------------|----------------|------------------|
| 1 | 340 (36°C) | 24,5 | 290 |

Diese Schicht wurde nur einmal gegossen mit einer Gießgeschwindigkeit von 12 m/min. Die Trockenschichtdicke war 23 $\mu$m.

Die getrocknete Folie wurde von der Trägerfolie abgezogen und bei ca. 145°C gereckt. Der Reckgrad betrug 650 %, die Breitenänderung beträgt - 70 %, die Dickenänderung - 56 %. Die 9,8 $\mu$m dicke Polarisationsfolie besaß im Wellenlängenbereich zwischen 500 und 730 nm Polarisationsgrade über 95 %.

**Patentansprüche**

1. Verfahren zur Herstellung von Polarisationsfolien auf der Basis eines Polyvinylalkohol-Polyacetylenpfropfcopolymerisates mit einem Acetylenanteil von 0,01 bis 15 Gew.-% durch Auftragen einer Lösung des Pfropfcopolymerisates, mittels eines dosierenden Gießers, auf eine an der Auftragstelle vorbeigeführte Trägerfolie, Entfernen des Lösungsmittels, Abziehen der Pfropfcopolymerisatfolie von der Trägerfolie und Recken der Pfropfcopolymerisatfolie.

2. Verfahren nach Anspruch 1, dadurch gekennzeichnet, daß man mindestens eine Schicht einer wäßrigen Lösung des Polyvinylalkohol-Polyacetylenpropfcopolymerisates mit einer Viskosität von 15 bis 1000 mPas und einer Oberflächenspannung von 15 bis 60 mN/m, auf die an der Gießstelle vorbeigeführte Trägerfolie gießt, wobei die Gesamtnaßschichtdicke der wenigstens einen Schicht 100 bis 600 $\mu$m beträgt.

3. Verfahren nach Anspruch 1, dadurch gekennzeichnet, daß man das Lösungsmittel durch Trocknen mit Luft mit einer Lufttemperatur bis 40°C entfernt, und die Pfropfcopolymerisatfolie im Verhältnis 1:1,5 bis 1:13 reckt.

4. Verfahren zur Herstellung von Polarisationsfolien gemäß Anspruch 1, dadurch gekennzeichnet, daß man mittels eines Gleitflächengießverfahren ein Paket enthaltend eine Schicht einer verdünnten wäßrigen Lösung des Polyvinylalkohol-Polyacetylenpfropfcopolymerisates mit einer Viskosität von 10 bis 150 mPa.s und einer Oberflächenspannung von 16 bis 34 mN/m, und mindestens eine Schicht einer wäßrigen Lösung des Polyvinylalkohol-Polyacetylenpfropfcopolymerisates mit einer Viskosität von 100 bis 1.000 mPa.s und einer Oberflächenspannung von 20 bis 52 mN/m, wobei die verdünnte Polyvinylalkohol-Polyacetylenpfropfcopolymerisat-Lösung die untere Schicht des Paketes (Beschleunigungsschicht) darstellt, auf die an der Gießstelle vorbeigeführte Trägerfolie gießt und anschließend trocknet.

5. Verfahren zur Herstellung von Polarisationsfolien gemäß Anspruch 4, dadurch gekennzeichnet, daß anstelle der wässrigen verdünnten Polyvinylalkohol-Polyacetylenpfropfcopolymerisatlösung eine wässrige Polyvinylalkohollösung mit einer Viskosität von 10 bis 150 mPa.s und einer Oberflächenspannung von 16 bis 34 mN/m als untere Schicht (Beschleunigungsschicht) aufgetragen wird.

6. Verfahren gemäß Anspruch 4, dadurch gekennzeichnet, daß das Gießpaket um eine weitere Schicht (Spreitungsschicht) einer wässrigen Polyvinylalkohollösung bzw. einer Polyvinylalkohol-Polyacetylenpfropfcopolymerlösung mit einer Viskosität von 10 bis 150 mPa.s und einer Oberflächenspannung von 16 bis 34 mN/m als oberste Schicht ergänzt wird.

7. Verfahren gemäß Anspruch 6, dadurch gekennzeichnet, daß die Konzentration an Polyvinylalkohol-Polyacetylen-Pfropfcopolymerisat in der Zwischenschicht 6 bis 12 Gew.-% und in der Beschleunigungsschicht 2 bis 8 Gew.-% der jeweiligen Lösung beträgt, und daß die Naßschichtdicke der Beschleunigungsschicht 10 bis 60 $\mu$m und die der PVAL-PAC enthaltenden Zwischenschicht 100 bis 300 $\mu$m beträgt.

8. Verfahren gemäß Anspruch 6, dadurch gekennzeichnet, daß die Naßschichtdicke der ergänzten obersten Schicht (Spreitungsschicht) 10 bis 60 $\mu$m beträgt.

9. Verfahren nach Anspruch 1, dadurch gekennzeichnet, daß man als Gleitflächengießverfahren das Vorhanggießverfahren benutzt.

10. Verfahren nach Anspruch 1, dadurch gekennzeichent, daß man als Gleitflächengießverfahren das Meniskusgießverfahren benutzt.

FIG.1

FIG. 2

EP 0 481 273 A2